(19) Europäisches Patentamt

European Patent Office

Office européen des brevets

(11) **EP 3 172 006 B1**

(12) **EUROPÄISCHE PATENTSCHRIFT**

(45) Veröffentlichungstag und Bekanntmachung des Hinweises auf die Patenterteilung:
**16.06.2021 Patentblatt 2021/24**

(21) Anmeldenummer: **15733709.8**

(22) Anmeldetag: **30.06.2015**

(51) Int Cl.:
*B23K 26/00* *(2014.01)*       *B23K 26/082* *(2014.01)*
*B23K 26/08* *(2014.01)*       *B23K 26/354* *(2014.01)*
*B21B 27/00* *(2006.01)*

(86) Internationale Anmeldenummer:
**PCT/EP2015/064878**

(87) Internationale Veröffentlichungsnummer:
**WO 2016/012204 (28.01.2016 Gazette 2016/04)**

(54) **VERFAHREN ZUM STRUKTURIEREN EINER WALZE DURCH LASERABTRAG**

METHOD FOR STRUCTURING A ROLLER BY MEANS OF LASER REMOVAL

PROCÉDÉ DE STRUCTURATION D'UN ROULEAU PAR ABLATION LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.07.2014 DE 102014110285**

(43) Veröffentlichungstag der Anmeldung:
**31.05.2017 Patentblatt 2017/22**

(73) Patentinhaber:
• **ThyssenKrupp Steel Europe AG**
**47166 Duisburg (DE)**
• **thyssenkrupp AG**
**45143 Essen (DE)**

(72) Erfinder:
• **LAUER, Benjamin**
**66620 Nonnweiler (DE)**
• **WISCHMANN, Stefan**
**10437 Berlin (DE)**
• **KOCH, Martin**
**47506 Neukirchen-Vluyn (DE)**
• **KOPPLIN, Karl-Heinz**
**45239 Essen (DE)**
• **SCHULZE-KRAASCH, Folkert**
**47179 Duisburg (DE)**

(74) Vertreter: **ThyssenKrupp Steel Europe AG**
**Patente/Patent Department**
**Kaiser-Wilhelm-Straße 100**
**47166 Duisburg (DE)**

(56) Entgegenhaltungen:
**EP-A1- 0 308 512     EP-A1- 2 689 883**
**EP-A2- 1 068 923**

**Beschreibung**

Die Erfindung betrifft ein Verfahren zum Strukturieren einer Walze durch Laserabtrag, insbesondere unter Verwendung der zuvor genannten Einrichtung, bei dem mit einem optischen System Laserpulse auf die Oberfläche einer zu strukturierenden Walze gerichtet werden, so dass die Walze in durch die Laserpulse belichteten Bearbeitungsfeldern durch Laserabtrag strukturiert wird, mit einem optischen Element, welches ein diffraktives optisches Element oder ein räumlicher Modulator für Licht ist, das räumliche Intensitätsmuster eines Laserpulses modifiziert wird.

Zur Herstellung von Flachprodukten wie z.B. Stahlblechen mit strukturierten (texturierten) Oberflächen werden im Stand der Technik sogenannte Dressierwalzen eingesetzt, die eine strukturierte Oberfläche aufweisen. Diese strukturierte Oberfläche überträgt sich beim Walzen auf das Walzprodukt, so dass sich bei diesen eine entsprechende Oberflächenstrukturierung ergibt.

Aus dem Stand der Technik sind verschiedene Verfahren bekannt, um Walzen wie die zuvor genannten Dressierwalzen mit einer geeigneten Oberflächenstruktur zu versehen. Diese Verfahren unterscheiden sich allgemein in Verfahren zur Herstellung deterministischer und in Verfahren zur Herstellung stochastischer Oberflächenstrukturen.

Zur Erzeugung stochastischer Oberflächenstrukturen wird unter anderem das Shot-Blast-Verfahren eingesetzt, bei dem kantiges Strahlkorn aus Hartguss auf die zu strukturierende Walzenoberfläche der rotierenden Walze geschleudert wird. Die so erzeugte Rauheitsstruktur entspricht einer stochastischen Verteilung gebirgsähnlich ineinander übergehender, plastischer Einzelverformungen. Die Reproduzierbarkeit des Shot-Blast-Verfahrens ist jedoch aufgrund eines zu großen Streubereichs der Prozessparameter nicht ausreichend.

Ein weiteres Verfahren zur Erzeugung strukturierter Feinbleche mit stochastischer Oberflächenstruktur ist aus der Veröffentlichung "Stahl und Eisen" 118 (1998) Nr. 3, Seiten 75-80 bekannt. Dabei wird die zur Strukturierung der Feinbleche verwendete Walze in einem geschlossenen Reaktorsystem mit einem verschleißfesten Chrom-Mehrschichtsystem beschichtet. Die Rauheitsstruktur dieses Chrom-Mehrschichtsystems ist durch eine relativ gleichmäßige stochastische Verteilung unterschiedlich großer Halbkugeln gekennzeichnet, die beim Dressieren in Form entsprechender Kalotten auf das Feinblech übertragen werden.

Ein weiteres Verfahren zur Erzeugung strukturierter Flachprodukte, insbesondere Feinbleche mit stochastischer Oberflächenstruktur ist aus der EP 2 006 037 B1 bekannt. Dabei wird die zur Strukturierung der Feinbleche verwendete Walze mittels Funkenerosion (Electro Discharge Texturing, EDT) strukturiert. Bei diesem Verfahren wird die Walzenoberfläche durch Funkenerosion aufgeraut. Dies geschieht, indem die Arbeitswalze in einem Tank, in dem sich ein Dielektrikum (z.B. Öl) befindet, an lateral schwingenden Elektroden vorbeigeführt wird. Zwischen den Elektroden und der Walze wird kurzzeitig, gegebenenfalls periodisch, eine definierte Spannung zwischen Elektrode und Walze angelegt. Dabei werden durch den Funkenerosionskanal Ladungsträger (Ionen) aus einem Elektrolyt heraus zur Walzenoberfläche hin beschleunigt. Beim Auftreffen auf die Walzenoberfläche lösen sie dort Walzenmaterial heraus und erzeugen eine Vertiefung. Bei dieser Art des Strukturierens von Walzen dient die Walzenrotation als schnelle Ablenkachse. Eine deterministische Strukturierung ist mit einer solchen EDT-Anlage nicht möglich, da es sich hierbei um einen stochastischen Funkenerosionsprozess handelt.

Ein weiteres Verfahren zum Strukturieren einer Walzenoberfläche ist aus der CN 101642778 B bekannt.

Aus dem Stand der Technik der DE 10 2012 017703 A1 ist ein Verfahren bekannt, mit dem Dressierwalzen deterministisch strukturiert werden können. Hierbei wird die gewünschte Struktur mittels gepulster Laserstrahlung auf der Dressierwalze erzeugt. Zu diesem Zweck wird ein fokussierter Laserstrahl, dessen Durchmesser auf der Oberfläche der Strukturgröße entspricht, über die rotierende Walze bewegt. Die Walzenrotation ist hierbei üblicherweise die schnelle Ablenkachse und die transversale Bewegung des Laserstrahls, d.h. die Bewegung in Walzenachsenrichtung, die langsame Ablenkachse, so dass der Laserstrahl die Walzenoberfläche quasi spiralförmig abtastet.

Des Weiteren sind aus dem Stand der Technik EP 2 689 883 A1, der die Basis für den Oberbegriff des Anspruchs 1 bildet, eine Einrichtung und ein gattungsgemäßes Verfahren zum Strukturieren einer Walze durch Laserabtrag bekannt, bei dem mit einem optischen System Laserpulse auf die Oberfläche einer zu strukturierenden Walze gerichtet werden, so dass die Walze in durch die Laserpulse belichteten Bearbeitungsfeldern durch Laserabtrag strukturiert wird, mit einem optischen Element, welches ein diffraktives optisches Element oder ein räumlicher Modulator für Licht ist, das räumliche Intensitätsmuster eines Laserpulses modifiziert wird.

In der durch einen Laserpuls belichteten Fläche kommt es aufgrund der hohen Intensität des Pulses zu einem lokalen Materialabtrag, charakterisiert durch den Durchmesser und die Abtragstiefe. Die Emission der Laserpulse kann beim Abrastern der Walze durch eine Regelung in vorgegebener Weise ein- bzw. ausgeschaltet werden, so dass mit diesem Verfahren grundsätzlich jede beliebige Struktur auf der Walze erzeugt werden kann.

Die durch den Laserstrahl bzw. Laserpuls pro Fläche auf die Walzenoberfläche übertragene Energie wird als Fluenz bezeichnet und üblicherweise in $J/cm^2$ angegeben. Aus Grundsatzuntersuchungen lässt sich für jedes Walzenmaterial eine optimale Energie pro Flächeneinheit (Fluenz) bestimmen, die als optimale Abtragsfluenz $\Phi_0$ bezeichnet wird. Die optimale Abtragsfluenz $\Phi_0$ ist material- und pulslängenabhängig. Bei dieser optimalen Abtragsfluenz $\Phi_0$ wird die höchste Abtragsrate je eingesetzter Leistung erreicht (B. Lauer, B. Neuenschwander, B. Jaeggi, M. Schmid, "From fs-ns: Influance of he pulse duration onto the material removal rate and machining quality for metals", ICALEO 2013, Paper M309 (2013)).

Im Stand der Technik wird nur ein Laserspot über die Walze gescannt. Die eingesetzte mittlere Leistung des Lasers auf die Walzenoberfläche ergibt sich aus folgender Gleichung:

$$P_m = \frac{\pi \cdot w_0^2}{2} \cdot f_{rep} \cdot \Phi_0 = \frac{A}{2} \cdot f_{rep} \cdot \Phi_0,$$ 

(1)

wobei $f_{rep}$ die Repetitionsrate der Laserpulse, $w_0$ der Radius der durch einen Laserpuls belichteten Fläche auf der Oberfläche der Walze und somit A die durch einen Laserpuls belichtete Fläche ist. Die mit einem Laserpuls belichtete bzw. belichtbare Fläche auf der Walzenoberfläche wird allgemein als Bearbeitungsfeld des betreffenden Laserpulses bezeichnet.

Die für die Belichtung einer großen Fläche $A_w$, wie zum Beispiel der gesamten Walzenoberfläche, erforderliche Bearbeitungszeit $t_w$ kann wie folgt berechnet werden:

$$t_w = \frac{A_w}{A \cdot f_{rep}}$$

(2)

Wie die Gleichungen (1) und (2) zeigen, lässt sich die Bearbeitungszeit $t_w$ bei Nutzung einer hohen mittleren Leistung $P_m$ durch entsprechende Vergrößerung der Repetitionsrate $f_{rep}$ bzw. der belichteten Fläche A verkürzen.

Bei bekannten Verfahren, die gepulste Laserstrahlen zur Strukturierung von Walzen einsetzen, werden elliptische oder rechteckige Spots und damit elliptische oder rechteckige Bearbeitungsfelder verwendet. Um bestimmte Strukturen auf der Walzenoberfläche zu erzeugen, wird der Spot systematisch über die Oberfläche bewegt. Der maximale Durchmesser bzw. die maximale Seitenlänge des Spots wird durch den kleinsten Abstand zweier auf der Walzenoberfläche zu erzeugenden Strukturelemente bestimmt. Daher kann die Spotgröße, d.h. die durch einen Laserpuls belichtete Fläche A nicht beliebig vergrößert werden, da ansonsten die erforderliche Auflösung für die herzustellenden Strukturen nicht erreicht werden kann.

Im Stand der Technik zeichnet sich ähnlich wie bei der Entwicklung von cw-Lasern auch bei Pulslasern ab, dass die ursprünglich geringen mittleren Leistungen $P_m$ von nur einigen 10 W auf mehrere 100 W gesteigert werden können. Allein auf die mittlere Leistung $P_m$ bezogen werden damit grundsätzlich die Voraussetzungen dafür geschaffen, Dressierwalzen mit einer Oberflächengröße von mehreren m$^2$ in kurzer Zeit zu strukturieren.

Es hat sich jedoch herausgestellt, dass die Bearbeitungszeit $t_w$ mit Pulslasern bei den bekannten Verfahren trotz Steigerung der maximalen mittleren Leistung $P_w$ auf mittlerweile mehrere 100 W nicht merklich verkürzt werden kann, da der dafür erforderlichen Steigerung von $f_{rep}$ und A gegenwärtig aus den folgenden Gründen Grenzen gesetzt sind.

Zum einen können bei hohen Repetitionsraten $f_{rep}$ (insbesondere im MHz-Bereich) die einzelnen Pulse aufgrund regelungstechnischer Beschränkungen nicht mehr geschaltet werden. Um eine möglichst schnelle Strukturierung mit komplizierten Mustern zu gewährleisten, muss jedoch die Emission einzelner Laserpulse kontrolliert werden, d.h. die Emission muss zwischen zwei Pulsen ein- bzw. ausgeschaltet werden können, sodass zur Erzeugung einer bestimmten Struktur auf der Walzenoberfläche beispielsweise nur jeder zweite Laserpuls die Walzenoberfläche erreicht.

Geschieht dieses Schalten nicht präzise genug, weicht die Sollposition des Abtrags von der Istposition auf der Walzenoberfläche ab. Hinzu kommt, dass zur Erzielung einer ausreichenden Abtragstiefe an ein- und derselben Stelle auf der Walzenoberfläche ggf. mehrere Laserpulse positioniert werden müssen. Bei hohen Repetitionsraten kann daher die Genauigkeit der Struktur nicht mehr gewährleistet werden.

Da typischerweise die Walzenrotation als schnelle Ablenkachse verwendet wird, muss die Repetitionsrate des Lasers zudem an die Walzenumdrehungsgeschwindigkeit angepasst werden, um die Oberfläche mit den einzelnen Laserpulsen abzurastern. Bei hohen Repetitionsraten kann jedoch aufgrund mechanischer Beschränkungen die erforderliche Ablenkgeschwindigkeit der Walze nicht erreicht werden, um die entsprechenden Pulsabstände, d.h. die Abstände der durch zwei aufeinander folgende Pulse auf der Walzenoberfläche belichteten Bearbeitungsfeldern, zu gewährleisten.

Bei einer Repetitionsrate $f_{rep}$ von 1 MHz und Puls-zu-Puls-Abständen von $30 \mu m$ müsste die Walzenoberfläche mit 30 m/s abgelenkt werden. Die Rotation von Walzen kann, bedingt durch die großen geometrischen Abmessungen und damit großen Massen, nicht beliebig schnell ausgeführt werden. Sie ist auf ca. 8 Umdrehungen pro Sekunde (U/s) begrenzt Dadurch ergibt sich bei einem Walzendurchmesser von ca. 0,45 m eine Oberflächengeschwindigkeit und somit eine Ablenkgeschwindigkeit von maximal 11 m/s.

Auch durch transversales Abscannen der Walze durch das optische System können die Ablenkgeschwindigkeiten nicht signifikant erhöht werden. So ist die Ablenkgeschwindigkeit bei mechanischen Scannersystemen wie Galvometerscannern oder Polygonscanner etc. aus mechanischen Gründen beschränkt. Bei diesem System ist die Trägheit der bewegten Teile ausschlaggebend für die maximale Ablenkgeschwindigkeit. Zum Beispiel verformen sich bei hohen Beschleunigungen die Spiegel von Galvometerscanner, wodurch die Ablenkung des Laserspots auf der Walzenoberfläche stark beeinflusst wird. Elektrooptische und akustooptische Systeme (KTN, AOD, etc.) sind für hohe Repetitionsraten und hohe Peakenergien der Laserpulse nicht geeignet. Unter dem Abscannen wird vorliegend das sukzessive Versetzen der Bearbeitungsfeld-Position verstanden. Unter Scannern bzw. Scannersystemen werden entsprechend Systeme verstanden, mit denen ein solches Abscannen, d.h. ein Versetzen der Bearbeitungsfeld-Position auf der Walzenoberfläche ermöglicht wird.

Um trotz Begrenzung der Repetitionsfrequenz $f_{rep}$ eine kürzere Bearbeitungszeit $t_w$ der Fläche $A_w$ zu ermöglichen, könnte alternativ das durch einen Lichtpuls belichtete Bearbeitungsfeld vergrößert werden. Um spezielle deterministische Strukturen auf die Walze aufzubringen, kann die Spotgröße, also der Durchmesser des fokussierten Laserstrahls auf der Oberfläche jedoch nicht beliebig gesteigert werden. Der kleinste Abstand zweier Strukturelemente auf der Oberfläche bestimmt hierbei den maximalen Spotdurchmesser. Ist der kleinste Abstand zwischen zwei Strukturelementen beispielsweise 30µm, so kann der Laserspot auf der Oberfläche einen maximalen Durchmesser von 30µm aufweisen. Folglich kann mit einem Laserpuls nur ein kleines Bearbeitungsfeld auf der Walzenoberfläche bearbeitet werden, so dass die Fläche A des Bearbeitungsfelds pro Lichtpuls begrenzt ist.

Bei den Verfahren aus dem Stand der Technik wird der Laser bei nicht abzutragenen Bearbeitungsfeldern ausgeschaltet und die für die entsprechenden Laserpulse zur Verfügung stehende Energie wird nicht genutzt. Dadurch verringert sich die effektive Repetitionsrate $f_{rep}^{eff}$ zusätzlich. Die effektive Repetitionsrate beschreibt die Anzahl der Laserpulse pro Zeiteinheit, die tatsächlich die Walzenoberfläche erreichen. Diese ist maximal so groß wie die Repetitionsrate $f_{rep}$ der Laserpulse, aber durch das Auslassen von Laserpulsen entsprechend der aufzubringenden Struktur typischerweise geringer.

Aufgrund der zuvor beschriebenen Einschränkungen kann bei den derzeitig bekannten Verfahren nicht die maximale mittlere Leistung $P_m$ des Lasers genutzt werden.

Vor diesem Hintergrund stellt sich die Aufgabe, eine Einrichtung sowie ein Verfahren zum Strukturieren einer Walze durch Laserabtrag zur Verfügung zu stellen, mit dem die Bearbeitungszeit $t_w$ verkürzt und die maximale mittlere Leistung $P_m$ des Lasers besser genutzt werden kann.

Diese Aufgabe wird durch die Merkmale des Patentanspruchs 1 gelöst.

Das optische Element ist dazu eingerichtet sein, das durch den Laserpuls auf der Oberfläche der Walze belichtete Bearbeitungsfeld in Abhängigkeit von der Modifizierung des räumlichen Intensitätsmusters des Laserpulses anzupassen. Wird das räumliche Intensitätsmuster eines Laserpulses beispielsweise derart modifiziert, dass der Laserpuls einen Bereich geringer Intensität aufweist, so kann das belichtete Bearbeitungsfeld beispielsweise entsprechend vergrößert werden, zum Beispiel im Wesentlichen um die durch diesen Bereich geringer Intensität auf der Oberfläche der Walze belichtete Fläche.

Erfindungsgemäß ist das optische Element dazu eingerichtet, das räumliche Intensitätsmuster eines Laserpulses zu modifizieren und das durch den Laserpuls auf der Oberfläche der Walze belichtete Bearbeitungsfeld in Abhängigkeit von der maximalen mittleren Leistung $P_m$ zu vergrößern und/oder derart anzupassen, dass sich die optimale Abtragsfluenz $\Phi_0$ ergibt.

Die Walzen-Aufnahmevorrichtung ist vorzugsweise als Drehvorrichtung ausgebildet und dazu eingerichtet, die Walze zu rotieren. Hierzu weist die Walzen-Aufnahmevorrichtung vorzugsweise ein Lager zur drehbaren Lagerung der Walzenachse und einen Drehantrieb zum Antrieb der Walze auf.

Bei der Laserquelle handelt es sich vorzugsweise um eine Kurz-Puls-Laserquelle oder um eine Ultra-Kurz-Puls-Laserquelle. Die Laserquelle ist insbesondere dazu eingerichtet, Laserpulse zu erzeugen, die für den Laserabtrag von einer Walzenoberfläche geeignet sind. Beispielsweise kann als Laserquelle ein Pulsfaserlaser mit einer maximalen mittleren Leistung von 500 W und einer Pulswiederholfrequenz von ca. 100 kHz mit einer Pulsdauer von ca. 1 µs bei einer Wellenlänge von ca. 1070 nm verwendet werden.

Das optische System weist vorzugsweise eine Abbildungsoptik auf, mit der die von der Laserquelle erzeugten Laserpulse auf die Oberfläche einer in der Walzen-Aufnahmevorrichtung aufgenommenen Walze abgebildet werden können.

Das optische Element ist dazu eingerichtet, das räumliche Intensitätsmuster eines Laserpulses zu modifizieren. Unter dem räumlichen Intensitätsmuster eines Laserpulses wird die Intensitätsverteilung des Laserpulses quer zur Ausbreitungsrichtung des Laserpulses verstanden. Durch die Modifizierung des räumlichen Intensitätsmusters des Laserpulses wird damit erreicht, dass das von dem Laserpuls belichtete Bearbeitungsfeld auf der Walzenoberfläche mit einer Intensitätsverteilung des Laserpulses beaufschlagt wird. Insbesondere kann das räumliche Intensitätsmuster des Laserpulses derart modifiziert werden, dass das Intensitätsmuster einen räumlichen Bereich hoher Intensität aufweist, so dass in dem entsprechenden Bereich des belichteten Bearbeitungsfelds ein Laserabtrag erfolgt, und dass das Intensitätsmuster einen räumlichen Bereich geringer Intensität aufweist, so dass in dem entsprechenden Bereich des belichteten Bearbeitungsfelds kein Laserabtrag erfolgt. Vorzugsweise weist das von dem optischen Element modifizierte Intensitätsmuster mindestens einen von einem Bereich hoher Intensität umgebenen Bereich geringer Intensität, d.h. ein inneres Intensitäts-Minimum, auf.

Das optische Element ist vorzugsweise dazu eingerichtet, einem Laserpuls ein vorgegebenes Intensitätsmuster aufzuprägen.

Das optische Element ist weiterhin dazu eingerichtet, das durch den Laserpuls auf der Oberfläche der Walze belichtete Bearbeitungsfeld zu modifizieren, insbesondere zu vergrößern. Vorzugsweise ist das optische Element insbesondere dazu eingerichtet, das durch den Laserpuls auf der Oberfläche der Walze belichtete Bearbeitungsfeld in Abhängigkeit von der maximalen mittleren Leistung $P_m$ zu vergrößern und/oder derart anzupassen, dass sich die optimale Abtragsfluenz $\Phi_0$ ergibt. Auf diese Weise kann bei einer vorgegebenen, insbesondere technisch beherrschbaren Repetitionsfrequenz $f_{rep}$ die Bearbeitungszeit $t_w$ verkürzt werden, so dass die Walzenoberfläche in kürzerer Zeit strukturiert werden kann. Die Größe des Bearbeitungsfelds lässt sich mit optischen Hilfsmitteln anpassen. Unter dem Bearbeitungsfeld wird die mit einem Lichtpuls belichtete bzw. belichtbare Fläche auf der Oberfläche der Walze verstanden. Unter einer Modifizierung des Bearbeitungsfelds wird verstanden, dass die Fläche des Bearbeitungsfelds auf der Oberfläche der Walze eine andere Größe aufweist, als es ohne das betreffende optische Element der Fall wäre. Unter einer Vergrößerung des Bearbeitungsfelds wird entsprechend verstanden, dass die Fläche des Bearbeitungsfelds auf der Oberfläche der Walze größer ist, als es ohne das betreffende optische Element der Fall wäre. Zu diesem Zweck kann das optische Element insbesondere dazu eingerichtet sein, den Laserpuls quer zur Ausbreitungsrichtung aufzuweiten.

Es wurde erkannt, dass durch das Vorsehen des beschriebenen optischen Elements eine räumliche Strukturierung des Laserpulses erreicht werden kann, die es erlaubt, das mit dem Laserpuls belichtete Bearbeitungsfeld zu vergrößern, ohne dass die Auflösung der auf die Walzenoberfläche aufzubringenden Strukturierung verschlechtert wird. Weiterhin wurde erkannt, dass sich durch die Vergrößerung des mit dem Laserpuls belichteten Bearbeitungsfelds auch die maximale mittlere Laserleistung der Laserquelle besser ausnutzen lässt, da die zur Verfügung stehende Leistung auf eine größere Fläche verteilt werden kann.

Insbesondere kann das belichtete Bearbeitungsfeld des Laserpulses bei einer technisch beherrschbaren Repetitionsfrequenz $f_{rep}$ so weit angepasst werden, dass mit käuflichen optischen Systemen, insbesondere Scannersystemen, die maximale mittlere Laserleistung genutzt werden kann. Idealerweise kann das Intensitätsmuster des Laserpulses so modifiziert werden, dass in den Bereichen, in denen ein Laserabtrag erfolgen soll, im Wesentlichen die für den Abtrag optimale Abtragsfluenz $\Phi_0$ erreicht wird.

Mit der beschriebenen Einrichtung kann damit eine optimale Flächenbearbeitung der Walzenoberfläche ermöglicht werden. Dies betrifft sowohl die Bearbeitungszeit in Abhängigkeit der Laserleistung, als auch die Intensitätsverteilung in den jeweils belichteten Bearbeitungsfeldern zur Erzeugung der gewünschten Zielgeometrie und deren Genauigkeit.

Insbesondere wird das durch den Laserpuls auf der Oberfläche der Walze belichtete Bearbeitungsfeld mit dem optischen Element in Abhängigkeit von der Modifizierung des räumlichen Intensitätsmusters des Laserpulses angepasst. Wird das räumliche Intensitätsmuster eines Laserpulses beispielsweise derart modifiziert, dass der Laserpuls einen Bereich geringer Intensität aufweist, so kann das belichtete Bearbeitungsfeld beispielsweise entsprechend vergrößert werden, zum Beispiel im Wesentlichen um die durch diesen Bereich geringer Intensität auf der Oberfläche der Walze belichtete Fläche.

Erfindungsgemäß wird mit dem optischen Element das räumliche Intensitätsmuster eines Laserpulses modifiziert und das durch den Laserpuls auf der Oberfläche der Walze belichtete Bearbeitungsfeld in Abhängigkeit von der maximalen mittleren Leistung $P_m$ vergrößert und/oder derart angepasst, dass sich die optimale Abtragsfluenz $\Phi_0$ ergibt.

Im Folgenden werden verschiedene Ausführungsbeispiele der Einrichtung sowie des Verfahrens beschrieben, wobei die einzelnen Ausführungsbeispiele beliebig untereinander kombinierbar und sowohl auf die Einrichtung als auch auf das Verfahren anwendbar sind.

Erfindungsgemäß ist das optische Element ein diffraktives optisches Element oder ein räumlicher Modulator für Licht. Diffraktive optische Elemente und räumliche Modulatoren für Licht haben sich als geeignet herausgestellt, einen Laserpuls mit einem gewünschten räumlichen Intensitätsmuster zu versehen. Mit diesen Elementen kann der Laserstrahl geformt werden, um in dem Bearbeitungsfeld die gewünschte Strukturgeometrie zu erzeugen.

Als diffraktive optische Elemente (DOE) kommen insbesondere Glasträger in Frage, auf die durch Fotolithografie Mikrostrukturen aufgebracht werden. In ihnen kommt es - wie bei einer Linse - durch unterschiedliche optische Weglängen der Teilstrahlen zu Phasenmodulationen, wodurch Interferenzmuster entstehen. Zusätzlich wird durch konstruktive und destruktive Überlagerung die Amplitude moduliert. So lassen sich durch geschickte Auslegung die Intensitätsmuster in einem Laserstrahl manipulieren. DOEs können zwei Aufgaben erfüllen: Sie können einen Laserstrahl formen (engl.: beam shaping) oder ihn in mehrere Teilstrahlen zerlegen (engl.: beam splitting). Die Mikrostruktur im DOE kann den Strahl durch den Brechungsindex oder durch Höhenmodulation formen. Gute Bauelemente erreichen dabei Wirkungsgrade von 80-99 % und Transmissionsgrade von 95-99 %. Wird das DOE mit einem Laserpuls durchstrahlt, so ergibt sich auf der mit dem Laserpuls belichteten Fläche, d.h. in dem jeweiligen Bearbeitungsfeld, die gewünschte Struktur.

Mit einem räumlichen Modulator für Licht (Spatial Light Modulator, SLM) kann die Wellenfront eines Lichtstrahls fast beliebig eingestellt werden. Die Funktionsweise eines SLM ist ähnlich der eines DOE. Über lokale Phasenanpassungen kann die Wellenfront des Strahls nach dem SLM frei kontrolliert werden. Die Auflösung der mit einem SLM erzeugbaren Struktur des Lichtpulses ist nur von der Pixelstruktur des SLMs abhängig, wobei ein Pixel den kleinsten, unabhängig modulierbaren Bereich eines Laserstrahls bzw. Laserpulses bezeichnet. Weitere Informationen zur Funktionsweise und zum Einsatz von SLMs können folgenden Publikationen entnommen werden: Z. Kuang et al., "Ultrafast laser parallel microprocessing using high uniformity binary Dammann grating generated beam array", Appl Surf. Sci. (2013), Vol. 273, Seite 101 und A. Jesacher et al., "Parallel direct laser writing in three dimensions with spatially dependent aberration correction", Optics Express (2010), Vol. 18, Seite 21090.

Im Vergleich zum DOE können mit einem SLM das Intensitätsmuster der Laserpulse und dadurch die Intensitätsstruktur auf der mit dem Laserpuls belichteten Fläche, d.h. in dem Bearbeitungsfeld, online verändert werden. Somit kann ein SLM während der Bearbeitung der Walzen beliebig viele verschiedene Strukturen erzeugen.

Bei einer weiteren Ausführungsform ist das optische Element dazu eingerichtet, das räumliche Intensitätsmuster eines Laserpulses derart zu modifizieren, dass nur in einem Teilbereich des durch den Laserpuls auf der Oberfläche der Walze belichteten Bearbeitungsfelds ein Laserabtrag erfolgt. Bei einer entsprechenden Ausführungsform des Verfahrens wird das räumliche Intensitätsmuster eines Laserpulses derart modifiziert, dass nur in einem Teilbereich des durch den Laserpuls auf der Oberfläche der Walze belichteten Bearbeitungsfelds ein Laserabtrag erfolgt.

Auf diese Weise ist es möglich, eine Substruktur in dem mit dem Laserpuls belichteten Bearbeitungsfeld der Walzenoberfläche zu erzeugen, wobei die Strukturgröße der Substruktur geringer ist als die Größe des Bearbeitungsfelds. Der Anteil des Teilbereichs an der Gesamtfläche des Bearbeitungsfelds, die durch den Laserpuls belichtet wird, wird vorliegend als Abtragsanteil $\alpha$ bezeichnet. Bei a=0,3 nimmt die Teilfläche, in der ein Laserabtrag erfolgt, beispielweise 30% des durch den Laserpuls belichteten Bearbeitungsfelds ein.

Bei einer weiteren Ausführungsform ist das optische Element dazu eingerichtet, das durch den Laserpuls auf der Oberfläche der Walze belichtete Bearbeitungsfeld derart zu vergrößern, dass das Bearbeitungsfeld in zumindest einer Richtung eine größere Ausdehnung aufweist als die kleinste Strukturgröße der auf die Oberfläche der Walze aufzubringenden Struktur. Bei einer entsprechenden Ausführungsform des Verfahrens wird das durch den Laserpuls auf der Oberfläche der Walze belichtete Bearbeitungsfeld derart vergrößert, dass das Bearbeitungsfeld in zumindest einer Richtung eine größere Ausdehnung aufweist als die kleinste Strukturgröße der auf die Oberfläche der Walze aufzubringenden Struktur.

Auf diese Weise ist es möglich, mit einem Laserpuls eine größere Fläche A zu belichten als bei den Verfahren aus dem Stand der Technik. Dadurch kann die Bearbeitungszeit $t_w$ für eine größere Fläche $A_w$ bei gegebener Repetitionsrate $f_{rep}$ verkürzt werden.

Bei einer weiteren Ausführungsform ist das optische Element dazu eingerichtet, das räumliche Intensitätsmuster des Laserpulses derart zu modifizieren und das durch den Laserpuls auf der Oberfläche der Walze belichtete Bearbeitungsfeld derart zu modifizieren, insbesondere in Abhängigkeit von der maximalen mittleren Leistung derart anzupassen, dass die Fluenz in dem Teilbereich des Bearbeitungsfelds, in dem ein Laserabtrag erfolgt, im Wesentlichen einer vorgegebenen optimalen Abtragsfluenz entspricht. Bei einer entsprechenden Ausführungsform des Verfahrens wird das räumliche Intensitätsmuster des Laserpulses derart modifiziert und das durch den Laserpuls auf der Oberfläche der Walze belichtete Bearbeitungsfeld derart modifiziert, insbesondere in Abhängigkeit von der maximalen mittleren Leistung derart angepasst, dass die Fluenz in dem Teilbereich des Bearbeitungsfelds, in dem ein Laserabtrag erfolgt, im Wesentlichen einer vorgegebenen optimalen Abtragsfluenz entspricht. Unter der maximalen mittleren Leistung wird die maximale mittlere Leistung der Laserquelle verstanden.

Auf diese Weise kann die maximale mittlere Leistung der Laserquelle optimal ausgenutzt und gleichzeitig der Laserabtrag durch Optimierung der Abtragsfluenz verbessert werden. Die optimale Größe der belichteten Fläche $A_{opt}$ hängt insbesondere von dem Abtragsanteil a, der materialspezifischen optimalen Abtragsfluenz $\Phi_0$, der mittleren Leistung des Lasers $P_m$ und der Repetitionsrate $f_{rep}$ ab. Entsprechend Gleichung (1) gilt:

$$A_{opt} = \frac{2 \cdot P_m}{\alpha \cdot \Phi_0 \cdot f_{rep}} \qquad (3)$$

Bei einer weiteren Ausführungsform ist die Einrichtung dazu eingerichtet, die Oberfläche einer in der Walzen-Aufnahmevorrichtung aufgenommenen Walze mit den von der Laserquelle erzeugten Laserpulsen abzurastern, insbesondere durch Rotieren der Walze in der Aufnahmevorrichtung und durch Versetzen, insbesondere Verfahren, der Bearbeitungsfeld-Position in transversaler Richtung mittels des optischen Systems. Bei einer entsprechenden Ausführungsform des Verfahrens wird die Oberfläche einer Walze mit den Laserpulsen abgerastert. Zu diesem Zweck kann insbesondere die Walze rotieren und die Bearbeitungsfeld-Position transversal mittels des optischen Systems versetzt, insbesondere verfahren, werden. Um die Bearbeitungsfeld-Position mit dem optischen System transversal zu versetzen, kann beispielsweise das optische System selbst oder zumindest ein Element davon wie z.B. ein Spiegel transversal versetzt bzw. verfahren werden. Alternativ kann auch ein Element des optischen Systems derart bewegt werden, dass die Laserpulse in transversaler Richtung abgelenkt werden. Zu diesem Zweck kann das optische System beispielsweise einen drehbaren Spiegel aufweisen, mit dem die Laserpulse in verschiedene Richtungen gelenkt werden können.

Mit der zuvor beschriebenen Ausführungsform kann nach und nach die gesamte Walzenoberfläche strukturiert werden. Bei der Walzenrotation kann es sich beispielsweise um die schnelle Ablenkachse und bei dem transversalen Versetzen der Bearbeitungsfeld-Position um die langsame Ablenkachse handeln, so dass der Laserstrahl die Walzenoberfläche quasi spiralförmig abtastet.

Bei einer weiteren Ausführungsform ist die Einrichtung dazu eingerichtet, die Oberfläche der Walze derart abzurastern, dass von den einzelnen Laserpulsen belichtete Bearbeitungsfelder auf der Oberfläche der Walze im Wesentlichen lückenlos und ohne Überlapp nebeneinanderliegen. Bei einer entsprechenden Ausführungsform des Verfahrens wird die Oberfläche der Walze derart abgerastert, dass von den einzelnen Laserpulsen belichtete Bearbeitungsfelder auf der Oberfläche der Walze im Wesentlichen lückenlos und ohne Überlapp nebeneinanderliegen.

Durch die im Wesentlichen überlappfreie Anordnung der Bearbeitungsfelder wird eine möglichst geringe Bearbeitungszeit $t_w$ erreicht. Weiterhin wird durch die im Wesentlichen lückenlose Anordnung der Bearbeitungsfelder eine gleichmäßige und präzise Strukturierung der Walzenoberfläche erreicht. Unter "im Wesentlichen lückenlos" wird verstanden, dass der Versatz zwischen den Kanten zweier benachbarter Bearbeitungsfelder maximal 10%, vorzugsweise maximal 5%, insbesondere maximal 2% der Ausdehnung der Bearbeitungsfelder in Richtung des Versatzes beträgt. Unter "im Wesentlichen ohne Überlapp" wird verstanden, dass der Überlapp zweier benachbarter Bearbeitungsfelder maximal 5%, vorzugsweise maximal 2% der Fläche des Bearbeitungsfelds beträgt.

Bei einer weiteren Ausführungsform ist das optische Element dazu eingerichtet, das räumliche Intensitätsmuster eines Laserpulses derart zu modifizieren, und die Einrichtung ist dazu eingerichtet, die Oberfläche einer in der Walzen-Aufnahmevorrichtung aufgenommenen Walze derart mit den Laserpulsen abzurastern, dass sich auf der Oberfläche der Walze eine vorgegebene Struktur ergibt. Bei einer entsprechenden Ausführungsform des Verfahrens wird das räumliche Intensitätsmuster eines Laserpulses derart modifiziert und die Oberfläche der Walze wird derart mit den Laserpulsen abgerastert, dass sich auf der Oberfläche der Walze eine vorgegebene Struktur ergibt. Bei dieser Struktur handelt es sich vorzugsweise um eine über die einzelnen Bearbeitungsfelder hinausgehende Struktur, insbesondere um eine vorgegebene Struktur der gesamten Oberfläche der Walze.

Bei einer Ausführungsform umfasst das optische System ein Rotationsausgleichsystem, das dazu eingerichtet ist, die Rotation einer in der Walzen-Aufnahmevorrichtung aufgenommenen Walze derart auszugleichen, dass zwei in transversaler Richtung nebeneinander liegende Bearbeitungsfelder auf der Oberfläche der Walze in Rotationsrichtung zueinander ausgerichtet sind. Bei einer entsprechenden Ausführungsform des Verfahrens wird die Rotation einer in der Walzen-Aufnahmevorrichtung aufgenommenen Walze für das optische System derart ausgeglichen, dass zwei in transversaler Richtung nebeneinander liegende Bearbeitungsfelder auf der Oberfläche der Walze in Rotationsrichtung zueinander ausgerichtet sind. Unter der Ausrichtung zweier Bearbeitungsfelder in Rotationsrichtung wird verstanden, dass die Bearbeitungsfelder zueinander im Wesentlichen keinen Versatz in Rotationsrichtung, insbesondere einen Versatz von höchstens 5% der Größe der Bearbeitungsfelder in Rotationsrichtung aufweisen.

Zu diesem Zweck kann das Rotationsausgleichssystem beispielsweise einen beweglichen Spiegel umfassen, durch den der Fokus des Laserstrahls über eine Folge von Laserpulsen mit der rotierenden Walze mitgeführt wird, so dass eine Belichtung mehrerer in transversaler Richtung nebeneinander liegender und in Rotationsrichtung zueinander ausgerichteter Bearbeitungsfelder ermöglicht wird.

Alternativ kann die Einrichtung auch ohne Rotationsausgleich betrieben werden. In diesem Fall weisen die in transversaler Richtung nebeneinander liegenden Bearbeitungsfelder einen der Rotationsgeschwindigkeit der Walze entsprechenden Versatz in Rotationsrichtung der Walze zueinander auf.

Bei einer weiteren Ausführungsform ist das optische System dazu eingerichtet, die Position der Bearbeitungsfelder auf der Oberfläche der Walze in Walzenachsenrichtung derart zu versetzen, dass zwischen der Belichtung eines ersten Bearbeitungsfelds und der Belichtung eines zweiten Bearbeitungsfelds, das gegenüber dem ersten Bearbeitungsfeld in Rotationsrichtung der Walze versetzt ist, mindestens ein drittes Bearbeitungsfeld belichtet wird, das gegenüber dem ersten Bearbeitungsfeld in transversaler Richtung versetzt ist. Bei einer entsprechenden Ausführungsform des Verfahrens wird zwischen der Belichtung eines ersten Bearbeitungsfelds und der Belichtung eines zweiten Bearbeitungsfelds, das gegenüber dem ersten Bearbeitungsfeld in Rotationsrichtung der Walze versetzt ist, mindestens ein drittes Bearbeitungsfeld belichtet, das gegenüber dem ersten Bearbeitungsfeld in transversaler Richtung versetzt ist.

Häufig bildet die Walzenrotation die schnelle Ablenkachse und die Versetzung der Bearbeitungsfeld-Position in transversaler Richtung die langsame Ablenkachse, so dass der Laserstrahl die Walzenoberfläche quasi spiralförmig abtastet. Die durch die Walzenrotation hervorgerufene Ablenkgeschwindigkeit der Oberfläche der Walze kann ggf. nicht ausreichen, um die Oberfläche bei einer gewissen Repetitionsrate $f_{rep}$ zwischen zwei Laserpulsen um die Seitenlänge des Bearbeitungsfelds abzulenken. Zwar kann in einem solchen Fall die Repetitionsrate $f_{rep}$ reduziert oder das Bearbeitungsfeld verkleinert werden. Wird jedoch bei der minimalen Repetitionsrate des Lasersystems, bei der die maximale Leistung des Lasers ausgeschöpft werden kann, die Seitenlänge des Bearbeitungsfelds nicht zwischen zwei Pulsen zurückgelegt, so kann bei der Strukturierung nicht die volle Laserleistung genutzt werden.

Bei dem zuvor beschriebenen Ausführungsbeispiel wird dieses Problem dadurch gelöst, dass zusätzlich zu der Rotation auch eine schnelle Versetzung in transversaler Richtung erfolgt, so dass in transversaler Richtung nebeneinander liegende Bearbeitungsfelder belichtet werden können, insbesondere bis zu dem Zeitpunkt, zu dem die Oberfläche der Walze die Seitenlänge des Bearbeitungsfelds in Rotationsrichtung zurückgelegt hat. Zu diesem Zeitpunkt kann dann die Belichtung eines in Rotationsrichtung benachbarten Bearbeitungsfelds erfolgen.

Für eine optimale Versetzung in transversaler Richtung muss effektiv die in Gleichung (4) geforderte Ablenkgeschwindigkeit erreicht werden. Aus diesem Grund umfasst das optische System vorzugsweise einen schnellen Scanner zum Positionieren des belichteten Bearbeitungsfelds auf der Walzenoberfläche. Die Geschwindigkeit des Scanners muss nicht "real" sein, d.h. die Positionsverschiebung muss nicht tatsächlich in dieser Geschwindigkeit erfolgen; vielmehr muss in der Zeit zwischen zwei Pulsen die gewünschte Versetzung erreicht werden. Demnach ist für die Versetzung nicht die Bahngeschwindigkeit, sondern die Endposition der Versetzung entscheidend. Hierbei ist unerheblich, wie die Endposition erreicht wird. Die Versetzung soll lediglich in vorgegebenen diskreten Schritten, insbesondere mit dem Abstand $l_a$, stattfinden. Vorzugsweise führt der Scanner nacheinander Arbeitsschritte durch, bei denen der Scanner die Bearbeitungsfeld-Position jeweils in vorgegebenen diskreten Schritten über die Breite der Walze versetzt. In diesem Fall wird mit jedem Arbeitsschritt ein Streifen der Walzenoberfläche in transversaler Richtung belichtet. Vorzugsweise fährt der Scanner bei jedem Arbeitsschritt dieselben transversalen Bearbeitungsfeld-Positionen an, so dass die Bearbeitungsfelder in den einzelnen belichteten Streifen zueinander ausgerichtet sind.

Bei einer weiteren Ausführungsform umfasst die Einrichtung eine Steuerung, die dazu eingerichtet ist, die Einrichtung entsprechend des zuvor beschriebenen Verfahrens oder einer seiner Ausführungsformen zu betreiben. Zu diesem Zweck kann die Steuerung beispielsweise einen Mikroprozessor und einen damit verbundenen Speicher aufweisen, wobei der Speicher Befehle enthält, deren Ausführung auf dem Mikroprozessor die Durchführung des beschriebenen Verfahrens veranlasst.

Weitere Merkmale und Vorteile der Erfindung sind der nachfolgenden Beschreibung von Ausführungsbeispielen zu entnehmen, wobei auf die beigefügte Zeichnung Bezug genommen wird.

In der Zeichnung zeigen

Fig. 1 eine Prinzipiendarstellung der Strukturierung einer Dressierwalze mittels eines gepulsten Lasers entsprechend einem Verfahren aus dem Stand der Technik,

Fig. 2 bis 4 schematische Darstellungen der Laserstrahlwirkung bzw. Wechselwirkungen an einem Materialabschnitt einer Walze,

Fig. 5 schematische Darstellung eines Ausführungsbeispiels einer Einrichtung zur Durchführung des erfindungsgemäßen Verfahrens,

Fig. 6a-c schematische Darstellungen von durch jeweils einen Laserpuls belichteten Bearbeitungsfeldern mit unterschiedlichen Abtragsanteilen,

Fig. 7a-b schematische Darstellungen zweier von jeweils einem Laserpuls belichteter Bearbeitungsfelder auf einer Walzenoberfläche, und zwar einmal ohne und einmal mit Rotationsausgleich, und

Fig. 8a-b schematische Darstellungen von durch eine Folge von Laserpulsen belichteter Bearbeitungsfelder, und zwar einmal ohne und einmal mit Rotationsausgleich.

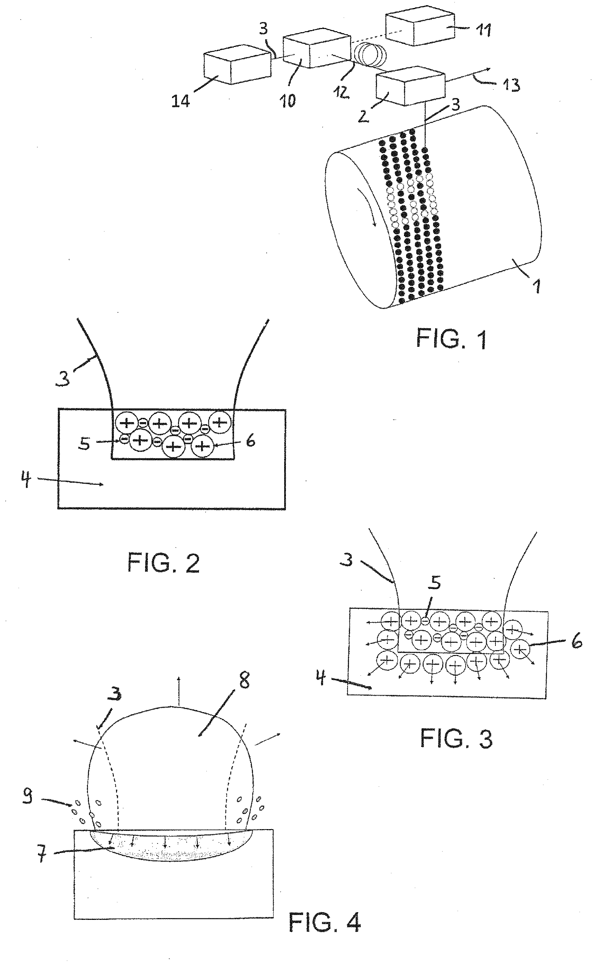

Fig. 1 zeigt eine Prinzipiendarstellung der Strukturierung einer Dressierwalze mittels eines gepulsten Lasers entsprechend einem Verfahren aus dem Stand der Technik.

Die zu strukturierende Walze 1 wird in einer als Drehvorrichtung ausgebildeten Walzen-Aufnahmevorrichtung angeordnet und dort rotiert. Während die Walze 1 schnell rotiert (schnelle Ablenkachse), wird eine Abbildungsoptik 2 eines optischen Systems mit relativ geringer Geschwindigkeit transversal in Walzenachsenrichtung bewegt (langsame Ablenkachse). Die Abbildungsoptik 2 bildet von einer Laserquelle 14 erzeugte Laserpulse auf die Oberfläche der Walze 1 ab. Durch die Überlagerung der Walzenrotation und der transversalen Bewegung der Abbildungsoptik 2 beschreibt der gepulste Laserstrahl auf der Walzenoberfläche eine spiralförmige Bahn (Fig. 1).

Der Laserstrahl 3 dringt während einer Pulsdauer von ca. 1 $\mu$s bis zu einer bestimmten Tiefe in das Material 4 der Walze 1 ein. Das Material 4 bzw. Oberflächenmaterial der Walze 1 besteht aus freien Leitungsbandelektronen 5 und positiven Metallionen 6 (Fig. 2).

Durch das elektromagnetische Feld des Laserstrahls 3 werden die Elektronen 5 beschleunigt und übertragen schließlich während der Wechselwirkungszeit ihre kinetische Energie an die Metallionen 6. Diese werden dadurch in Schwingungen versetzt und transferieren die Schwingungsenergie an benachbarte Metallionen, die sich außerhalb der reinen Wechselwirkungszone zwischen der Laserstrahlung und dem Material der Walze befinden (Fig. 3). Auf diese Weise kommt es zur Wärmeerzeugung in dem bestrahlten Walzenmaterial 4. Durch weitere Laserenergiezufuhr während der Pulszeit (Fig. 4) wird das Material aufgeschmolzen. Schließlich wird die Verdampfungstemperatur erreicht, und ein Teil der Schmelze 7 verdampft. Die sich oberhalb der Schmelze 7 ausbildende Metalldampfwolke 8 expandiert schnell, wobei der Rückstoßeffekt ein Austreiben der restlichen Schmelze in Form von schmelzflüssigen Spritzern 9 bewirkt. Das Kurzpulslaserverfahren zeichnet sich durch ein relativ großes Materialabtragevolumen pro Puls aus.

Durch Wahl der Parameter Pulsfrequenz, Pulsenergie, Abstand der Spuren auf der rotierenden Walzenoberfläche, Laserauftreffpunktdurchmesser (Spotdurchmesser), Laserintensitätsprofile und/oder Drehzahl der Walze wird die Verteilung und die Geometrie der Näpfchen auf der Walzenoberfläche bestimmt. Durch eine Überlappung einzelner Näpfchen werden talförmige, zusammenhängende Bereiche strukturiert bzw. erzeugt.

Um auf der Oberfläche der Walze 1 eine vorgegebene, deterministische Struktur zu erzeugen, wird die schnelle kontinuierliche Folge der Laserpulse gezielt unterbrochen. Die Unterbrechung der Laserpulse kann mittels eines schnellen optischen Schalters, einem AOM (Akustoopischer Modulator) 10 realisiert werden (Fig. 1). Durch schnelles Zu- und Abschalten des AOM 10 können somit deterministisch einzelne Laserpulse entweder auf die Walzenoberfläche projiziert oder aber auf eine Kühlfalle 11 umgelenkt und dort vernichtet werden. Bei Projektion eines Laserpulses auf die Walzenoberfläche führt die Energie des Lasers zu einem Laserabtrag an der betreffenden Stelle (schwarze Punkte auf der Walze 1), während die Oberfläche bei Vernichtung des Laserpulses an der betreffenden Stelle unverändert bleibt (weiße Punkte auf der Walze 1).

Der hierzu eingesetzte Laser (Pulsfaserlaser) weist eine maximale mittlere Leistung von 500 W und eine Pulswiederholfrequenz von ca. 100 kHz bei einer Wellenlänge von ca. 1070 nm. Die Pulsdauer beträgt beispielsweise ca. 1 μs.

Nach Passieren des AOM 10 wird der Laserstrahl 3 mit Hilfe eines Lichtleiterkabels 12 zu der Fokussieroptik 2 geleitet. Der Pfeil 13 bezeichnet die Bewegungsrichtung der Abbildungsoptik 2.

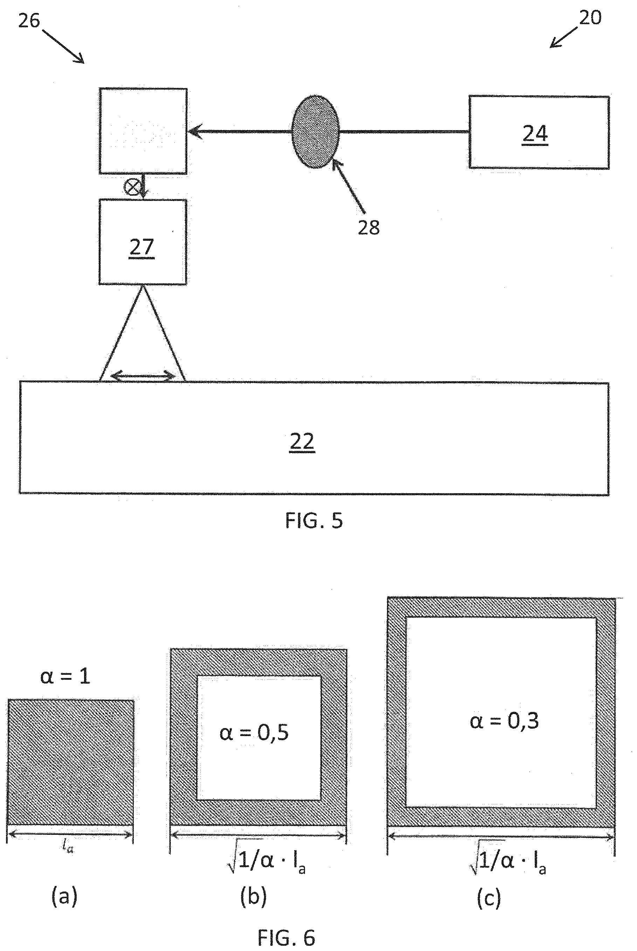

Fig. 5 zeigt eine schematische Darstellung eines Ausführungsbeispiels einer Einrichtung zur Durchführung des erfindungsgemäßen Verfahrens. Die Einrichtung 20 umfasst eine Walzen-Aufnahmevorrichtung (nicht dargestellt), die zur Aufnahme einer Walze 22 eingerichtet ist. Die Walzen-Aufnahmevorrichtung ist vorliegend als Drehvorrichtung zur Rotation der Walze 22 ausgebildet. Weiterhin umfasst die Einrichtung 20 eine gepulste Laserquelle 24 sowie ein optisches System 26, das dazu eingerichtet ist, von der Laserquelle 24 erzeugte Laserpulse auf die Oberfläche der Walze 22 zu richten. Zu diesem Zweck umfasst das optische System 26 ein Scanner, mit der die Laserpulse auf verschiedene Bearbeitungsfelder in transversaler Richtung der Walze 22 gerichtet werden können.

Weiterhin umfasst die Einrichtung 20 ein optisches Element 28, bei dem es sich insbesondere um ein diffraktives optisches Element oder um einen räumlichen Modulator für Licht handeln kann. Mit dem optischen Element kann das räumliche Intensitätsmuster eines von der Laserquelle 24 erzeugten Laserpulses modifiziert und das durch den Laserpuls auf der Oberfläche der Walze 22 belichtete Bearbeitungsfeld modifiziert werden, insbesondere in Abhängigkeit von der maximalen mittleren Leistung vergrößert werden und/oder derart angepasst werden, dass sich die optimale Abtragungsfluenz ergibt.

Fig. 6a-c zeigt schematische Darstellungen von durch jeweils einen Laserpuls belichteten Bearbeitungsfeldern mit unterschiedlichen Abtragsanteilen $\alpha$.

Fig. 6a zeigt zunächst ein Bearbeitungsfeld auf der Oberfläche der Walze 22, das durch einen Laserpuls belichtet wurde, dessen Intensitätsmuster nicht durch das optische Element 28 modifiziert wurde. Das Bearbeitungsfeld ist bei diesem Beispiel quadratisch mit einer Seitenlänge $l_a$. Der entsprechende Laserpuls weist eine im Wesentlichen konstante Intensitätsverteilung auf, so dass auf der gesamten Fläche des Bearbeitungsfelds ein Laserabtrag erfolgt (schraffierte Fläche in Fig. 6a). Der Abtragsanteil $\alpha$ hat bei dieser Fläche daher den Wert 1.

Durch die Modifizierung des räumlichen Intensitätsmusters eines Laserpulses mit dem optischen Element 28 kann die Intensitätsverteilung innerhalb des Laserpulses so geändert werden, dass sich eine Strukturierung des belichteten Bearbeitungsfelds ergibt. Insbesondere kann der Laserpuls einen Teilbereich mit einem Intensitätsminimum aufweisen, so dass in dem entsprechenden Bereich des Bearbeitungsfelds auf der Walzenoberfläche kein Laserabtrag erfolgt. So zeigen die Fig. 6b und 6c Beispiele entsprechend belichteter Bearbeitungsfelder mit jeweils einem äußeren Bereich, in dem ein Laserabtrag erfolgt ist (schraffiert), und mit jeweils einem inneren Bereich, in dem kein Laserabtrag erfolgt ist (nicht schraffiert). Der Abtragsanteil $\alpha$ beträgt bei Fig. 6b 0,5 und bei Fig. 6c 0,3.

Wie die Fig. 6b und 6c zeigen, können durch die Modifizierung des räumlichen Intensitätsmusters durch das optische Element 28 Strukturgrößen auf der Walzoberfläche erzeugt werden, deren Ausdehnung geringer ist als die Größe des durch einen Laserpuls belichteten Bearbeitungsfelds.

Zudem wird durch das optische Element 28 eine Vergrößerung des belichteten Bearbeitungsfelds bewirkt, so dass mit einem Laserpuls eine größere Fläche belichtet werden kann. Erfindungsgemäß wird die Größe des belichteten Bearbeitungsfelds abhängig vom Abtragsanteil $\alpha$ eingestellt. Weist das in Fig. 6a dargestellte belichtete Bearbeitungsfeld mit $\alpha = 1$ eine Ausdehnung $l_a$ auf, so weist ein entsprechendes Bearbeitungsfeld mit einem geringeren Abtragsanteil $\alpha$ eine um den Faktor $\sqrt{1/\alpha}$ vergrößerte Ausdehnung auf, ohne dass die Intensität in dem Bereich, in dem ein Abtrag erfolgt, reduziert werden muss.

Die Größe des belichteten Bearbeitungsbereichs und das räumliche Intensitätsmuster des Laserpulses werden durch das optische Element 28 so angepasst, dass die Fluenz in dem Teilbereich, in dem Laserabtrag erfolgt, im Bereich der optimalen Abtragsfluenz $\Phi_0$ liegt.

Auf diese Weise lässt sich die maximale mittlere Leistung des Lasers $P_m$ bei umsetzbarer Repetitionsrate $f_{rep}$ für die Bearbeitung der Walzenfläche nutzen. Um eine möglichst schnelle Bearbeitung zu gewährleisten, werden die belichteten Bearbeitungsfelder vorzugsweise möglichst ohne Überlapp und lückenlos nebeneinander auf der Walzenoberfläche positioniert, d.h. die Bearbeitungsfelder werden möglichst passgenau nebeneinander belichtet, um die gewünschte Struktur der Walzenoberfläche gewährleisten zu können.

Die Abrasterung der Walzenoberfläche erfolgt daher vorzugsweise derart, dass die Ablenk- bzw. Versatzgeschwindigkeit $v_s$ des Laserfokus, d.h. der Bearbeitungsfeld-Position, auf der Walzenoberfläche abhängig von der Seitenlänge $l_a$ der Fläche A des von einem Laserpuls belichteten Bearbeitungsfelds und von der Repetitionsrate $f_{rep}$ eingestellt wird, vorzugsweise wie folgt:

$$v_s = l_a \cdot f_{rep}, \tag{4}$$

*wobei*

$$l_a = \sqrt{A} = \sqrt{\frac{2 \cdot P_m}{\alpha \cdot \Phi_0 \cdot f_{rep}}}. \tag{5}$$

Bei vorgegebener maximaler mittlerer Leistung des Lasers $P_m$ und materialspezifischer optimaler Abtragsfluenz $\Phi_0$ ist die Fläche A damit nur von der Repetitionsrate $f_{rep}$ abhängig. Da zur Erzielung einer gewünschten Struktur nicht die gesamte Fläche eines Bearbeitungsfelds abgetragen werden soll, gibt der Abtragsanteil $\alpha$ den Teil der gewünschten Struktur an, der abgetragen werden soll.

In den Fig. 6a-c nimmt der Abtragsanteil $\alpha$ von Fig. 6a bis 6c ab, wobei die abgetragene Fläche (schraffiert) konstant bleibt. Aufgrund des verringerten Flächenanteils des Abtrags vergrößert sich die damit entsprechend die Gesamtfläche A des jeweiligen Bearbeitungsfelds.

Für die optimale Positionierung auf der Walzenfläche werden mit den Laserpulsen vorzugsweise rechteckige, insbesondere quadratische Bearbeitungsfelder belichtet.

Die maximale mittlere Leistung $P_m$ und die Repetitionsrate $f_{rep}$ haben einen Einfluss auf die Scangeschwindigkeit, d.h. auf die Geschwindigkeit, mit der der Laser über die Walzenoberfläche versetzt bzw. verfahren werden kann. Bei optimaler Positionierung kann die gesamte Laserleistung ohne nennenswerte Verluste genutzt werden. Hierbei ergibt sich die optimale Bearbeitungszeit:

$$t_w = \frac{A_w}{A \cdot f_{rep}} = \frac{\alpha \cdot \Phi_0 \cdot A_w}{2 \cdot P_m} \tag{6}$$

Damit ist die Bearbeitungszeit $t_w$ nur von der optimalen Abtragsfluenz $\Phi_0$ der Walzenoberfläche A, und der maximalen mittleren Leistung $P_m$ abhängig. Der Abtragsanteil $\alpha$ wird durch die gewünschte Stuktur auf der Walze bestimmt. Die Bearbeitungszeit $t_w$ ist damit unabhängig von der Repetitionsrate $f_{rep}$, so dass diese im Rahmen des für den Laser möglichen Bereichs frei gewählt werden kann. Die Ablenkgeschwindigkeit für den Laserfokus kann dann über Gleichung (4) bestimmt werden.

Die maximale mittlere Leistung des Lasers $P_m$ bestimmt damit die Bearbeitungszeit $t_w$ der Oberfläche mit der gewünschten Struktur. Die mittlere Leistung $P_m$ und die Repetitionsrate $f_{rep}$ sind voneinander entkoppelt. Daher kann auch bei geringer Repetitionsrate $f_{rep}$ die maximale mittlere Leistung des Lasers praktisch vollständig für die Bearbeitung der Walzenoberfläche genutzt werden. Dies wird insbesondere dadurch erreicht, dass die Größe des durch einen Laserpuls belichteten Bearbeitungsfelds nicht mehr durch die kleinste aufzubringende Strukturgröße beschränkt wird. Vielmehr wird die Größe des belichteten Bearbeitungsfelds nun nur durch die Auflösung des optischen Elements 28 eingeschränkt. Mit anderen Worten kann die Fläche des Bearbeitungsfelds nur soweit vergrößert werden, dass mit dem optischen Element der kleinste Abstand zweier Strukturelemente aufgelöst werden kann.

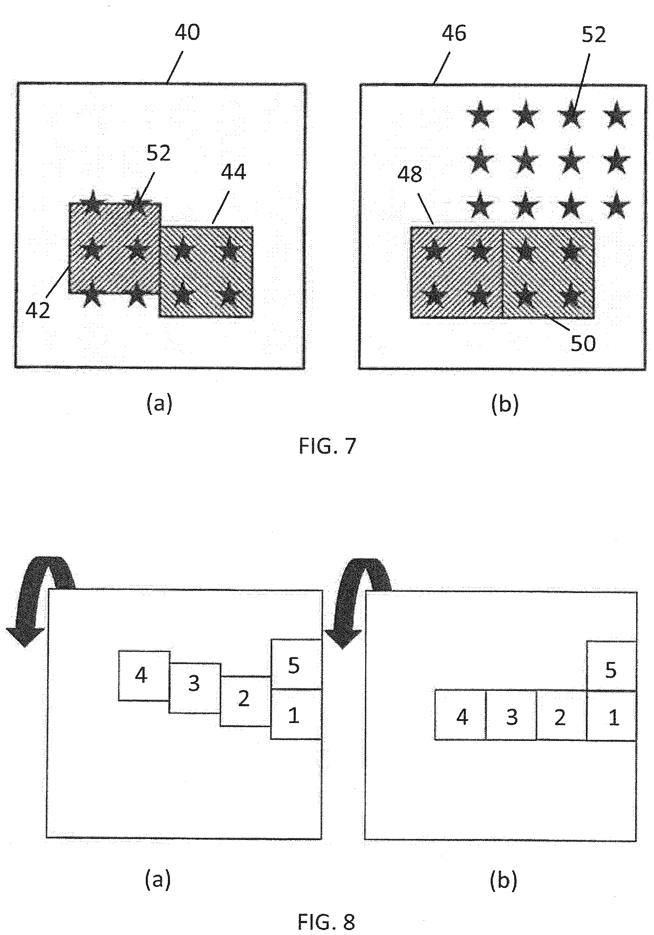

Fig. 7a zeigt eine schematische Darstellung einer Walzenoberfläche 40 mit zwei durch je einen Laserpuls ohne Rotationsausgleich belichteten Bearbeitungsfeldern 42, 44. Fig. 7b zeigt eine entsprechende schematische Darstellung einer Walzenoberfläche 46 mit zwei durch je einen Laserpuls mit Rotationsausgleich belichteten Bearbeitungsfeldern 48, 50.

Die durch den Laserabtrag erzeugte Strukturierung (Textur) der Walzenoberflächen 40 bzw. 46 ist in Fig. 7a-b durch ein gleichmäßiges Raster aus sternförmigen Strukturelementen 52 angedeutet. Die minimale Strukturgröße, insbesondere der Abstand zwischen zwei Strukturelementen ist kleiner als die jeweilige Ausdehnung eines durch einen Laserpuls belichteten Bearbeitungsfelds 42, 44, 48, 50. Dies wird bei der zuvor beschriebenen Einrichtung durch das optische Element 28 ermöglicht, das die räumlichen Intensitätsmuster der einzelnen Laserpulse derart modifiziert, dass sich auf der jeweiligen Walzenoberfläche 40, 46 eine Strukturierung innerhalb eines belichteten Bearbeitungsfelds 42, 44, 48, 50 ergibt.

Die belichteten Bearbeitungsfelder 42, 44 bzw. 48, 50 sind jeweils in transversaler Richtung zueinander angeordnet. Aufgrund der Rotation der Walze während der Belichtung ist das Bearbeitungsfeld 44 in Fig. 7a gegenüber dem Bearbeitungsfeld 42 in Rotationsrichtung versetzt. Hierdurch ergibt sich ein entsprechender Versatz der in den jeweiligen Bearbeitungsfeldern zu erzeugenden Struktur. Um dennoch die gewünschte Struktur auf der Oberfläche der Walze zu erreichen, wäre es daher erforderlich, die Modifizierung des räumlichen Intensitätsmusters für die jeweiligen Laserpulse entsprechend der relativen Lagen der belichteten Bearbeitungsfelder zueinander individuell anzupassen.

Eine alternative und weniger aufwändige Methode zeigt Fig. 7b. Durch ein vorgesehenes Rotationsausgleichsystem wird die Rotation der Walze beim Belichten der Bearbeitungsfelder 48, 50 ausgeglichen, so dass die Bearbeitungsfelder optimal ohne Versatz in Rotationsrichtung nebeneinander liegen. Um die gewünschte Struktur der Walzenoberfläche zu erreichen, kann in diesem Fall in jedem Bearbeitungsfeld 48, 50 die gleiche Struktur erzeugt werden.

Als Rotationsausgleichsystem können insbesondere bekannte Scannersysteme verwendet werden, da die für den Rotationsausgleich erforderlichen Ablenkgeschwindigkeiten der Rotationsgeschwindigkeit der Walzenoberfläche entsprechen und daher moderat sind. Für das Versetzen der Bearbeitungsfeld-Position in transversaler Richtung wird hingegen vorzugsweise ein schnellerer Scanner eingesetzt, da er die in Gleichung (4) geforderte Ablenkgeschwindigkeit effektiv erreichen muss. Vorzugsweise kann auch ein Scannersystem eingesetzt werden, das für beide Ablenkbewegungen, d.h. in Rotationsrichtung und in transversaler Richtung, eingerichtet ist.

Fig. 8 zeigt schematische Darstellungen von durch eine Folge von Laserpulsen belichteter Bearbeitungsfelder ohne (Fig. 8a) und mit Rotationsausgleich (Fig. 8b). Die Reihenfolge der Belichtung der Bearbeitungsfelder ist in den Fig. 8a-b jeweils durch aufsteigende Nummern 1 - 5 angegeben. Das optische System verschiebt die Position der Bearbeitungsfelder auf der Walzenoberfläche in transversaler Richtung und belichtet so eine Reihe von Bearbeitungsfeldern in transversaler Richtung (Bearbeitungsfelder 1 bis 4), bis die Walzenoberfläche durch die Rotation der Walze um die Seitenlänge der Bearbeitungsfelder verschoben wurde. Anschließend wird die Belichtung in einer in Rotationsrichtung versetzen Reihe fortgesetzt (Bearbeitungsfeld 5).

Die maximale mittlere Leistung des Lasers $P_m$ bestimmt damit die Bearbeitungszeit $t_w$ der Oberfläche mit der gewünschten Struktur. Die mittlere Leistung $P_m$ und die Repetitionsrate $f_{rep}$ sind voneinander entkoppelt. Daher kann auch bei geringer Repetitionsrate $f_{rep}$ die maximale mittlere Leistung des Lasers praktisch vollständig für die Bearbeitung der Walzenoberfläche genutzt werden. Dies wird insbesondere dadurch erreicht, dass die Größe des durch einen Laserpuls belichteten Bearbeitungsfelds nicht mehr durch die kleinste aufzubringende Strukturgröße beschränkt wird. Vielmehr wird die Größe des belichteten Bearbeitungsfelds nun nur durch die Auflösung des optischen Elements 28 eingeschränkt. Mit anderen Worten kann die Fläche des Bearbeitungsfelds nur soweit vergrößert werden, dass mit dem optischen Element der kleinste Abstand zweier Strukturelemente aufgelöst werden kann.

Fig. 7a zeigt eine schematische Darstellung einer Walzenoberfläche 40 mit zwei durch je einen Laserpuls ohne Rotationsausgleich belichteten Bearbeitungsfeldern 42, 44. Fig. 7b zeigt eine entsprechende schematische Darstellung einer Walzenoberfläche 46 mit zwei durch je einen Laserpuls mit Rotationsausgleich belichteten Bearbeitungsfeldern 48, 50.

Die durch den Laserabtrag erzeugte Strukturierung (Textur) der Walzenoberflächen 40 bzw. 46 ist in Fig. 7a-b durch ein gleichmäßiges Raster aus sternförmigen Strukturelementen 52 angedeutet. Die minimale Strukturgröße, insbesondere der Abstand zwischen zwei Strukturelementen ist kleiner als die jeweilige Ausdehnung eines durch einen Laserpuls belichteten Bearbeitungsfelds 42, 44, 48, 50. Dies wird bei der zuvor beschriebenen Einrichtung durch das optische Element 28 ermöglicht, das die räumlichen Intensitätsmuster der einzelnen Laserpulse derart modifiziert, dass sich auf der jeweiligen Walzenoberfläche 40, 46 eine Strukturierung innerhalb eines belichteten Bearbeitungsfelds 42, 44, 48, 50 ergibt.

Die belichteten Bearbeitungsfelder 42, 44 bzw. 48, 50 sind jeweils in transversaler Richtung zueinander angeordnet. Aufgrund der Rotation der Walze während der Belichtung ist das Bearbeitungsfeld 44 in Fig. 7a gegenüber dem Bearbeitungsfeld 42 in Rotationsrichtung versetzt. Hierdurch ergibt sich ein entsprechender Versatz der in den jeweiligen Bearbeitungsfeldern zu erzeugenden Struktur. Um dennoch die gewünschte Struktur auf der Oberfläche der Walze zu erreichen, wäre es daher erforderlich, die Modifizierung des räumlichen Intensitätsmusters für die jeweiligen Laserpulse entsprechend der relativen Lagen der belichteten Bearbeitungsfelder zueinander individuell anzupassen.

Eine alternative und weniger aufwändige Methode zeigt Fig. 7b. Durch ein vorgesehenes Rotationsausgleichsystem wird die Rotation der Walze beim Belichten der Bearbeitungsfelder 48, 50 ausgeglichen, so dass die Bearbeitungsfelder optimal ohne Versatz in Rotationsrichtung nebeneinander liegen. Um die gewünschte Struktur der Walzenoberfläche zu erreichen, kann in diesem Fall in jedem Bearbeitungsfeld 48, 50 die gleiche Struktur erzeugt werden.

Als Rotationsausgleichsystem können insbesondere bekannte Scannersysteme verwendet werden, da die für den Rotationsausgleich erforderlichen Ablenkgeschwindigkeiten der Rotationsgeschwindigkeit der Walzenoberfläche entsprechen und daher moderat sind. Für das Versetzen der Bearbeitungsfeld-Position in transversaler Richtung wird hingegen vorzugsweise ein schnellerer Scanner eingesetzt, da er die in Gleichung (4) geforderte Ablenkgeschwindigkeit effektiv erreichen muss. Vorzugsweise kann auch ein Scannersystem eingesetzt werden, das für beide Ablenkbewegungen, d.h. in Rotationsrichtung und in transversaler Richtung, eingerichtet ist.

Fig. 8 zeigt schematische Darstellungen von durch eine Folge von Laserpulsen belichteter Bearbeitungsfelder ohne (Fig. 8a) und mit Rotationsausgleich (Fig. 8b). Die Reihenfolge der Belichtung der Bearbeitungsfelder ist in den Fig. 8a-b jeweils durch aufsteigende Nummern 1 - 5 angegeben. Das optische System verschiebt die Position der Bearbeitungsfelder auf der Walzenoberfläche in transversaler Richtung und belichtet so eine Reihe von Bearbeitungsfeldern in transversaler Richtung (Bearbeitungsfelder 1 bis 4), bis die Walzenoberfläche durch die Rotation der Walze um die Seitenlänge der Bearbeitungsfelder verschoben wurde. Anschließend wird die Belichtung in einer in Rotationsrichtung versetzen Reihe fortgesetzt (Bearbeitungsfeld 5).

**Patentansprüche**

1. Verfahren zum Strukturieren einer Walze (22) durch Laserabtrag,

   - bei dem mit einem optischen System (26) Laserpulse auf die Oberfläche einer zu strukturierenden Walze (22) gerichtet werden, so dass die Walze (22) in durch die Laserpulse belichteten Bearbeitungsfeldern (42, 44, 48, 50) durch Laserabtrag strukturiert wird, mit einem optischen Element (28), welches ein diffraktives optisches Element oder ein räumlicher Modulator für Licht ist, das räumliche Intensitätsmuster eines Laserpulses modifiziert,
   **dadurch gekennzeichnet,**
   - **dass** das durch den Laserpuls auf der Oberfläche der Walze (22) belichtete Bearbeitungsfeld (42, 44, 48, 50) in Abhängigkeit von der maximalen mittleren Leistung $P_m$ der Laserquelle vergrößert wird und/oder derart angepasst wird, dass sich die material- und pulslängenabhängige optimale Abtragsfluenz $\Phi_0$ ergibt, und die Größe des belichteten Bearbeitungsfelds (42, 44, 48, 50) in Abhängigkeit eines Abtragsanteils a, welcher den Teil der abzutragenden Struktur angibt, eingestellt wird.

2. Verfahren nach Anspruch 1,
   **dadurch gekennzeichnet,**
   **dass** das räumliche Intensitätsmuster eines Laserpulses derart modifiziert wird, dass nur in einem Teilbereich des durch den Laserpuls auf der Oberfläche der Walze (22) belichteten Bearbeitungsfelds (42, 44, 48, 50) ein Laserabtrag erfolgt.

3. Verfahren nach Anspruch 1 oder 2,
   **dadurch gekennzeichnet,**
   **dass** das durch den Laserpuls auf der Oberfläche der Walze (22) belichtete Bearbeitungsfeld (42, 44, 48, 50) derart vergrößert wird, dass das Bearbeitungsfeld (42, 44, 48, 50) in zumindest einer Richtung eine größere Ausdehnung aufweist als die kleinste Strukturgröße der auf die Oberfläche der Walze (22) aufzubringenden Struktur.

4. Verfahren nach einem der Ansprüche 1 bis 3,
   **dadurch gekennzeichnet,**
   **dass** das räumliche Intensitätsmuster des Laserpulses derart modifiziert und das durch den Laserpuls auf der Oberfläche der Walze (22) belichtete Bearbeitungsfeld (42, 44, 48, 50) derart modifiziert, insbesondere vergrößert wird, dass die Fluenz in dem Teilbereich des Bearbeitungsfelds (42, 44, 48, 50), in dem ein Laserabtrag erfolgt, im Wesentlichen einer vorgegebenen optimalen Abtragsfluenz ($\Phi_0$) entspricht.

**Claims**

1.  Method for structuring a roller (22) by way of laser ablation,

    - in which laser pulses are directed using an optical system (26) onto the surface of a roller (22) to be structured so that the roller (22) is structured by laser ablation in processing fields (42, 44, 48, 50) that are exposed to the laser pulses, with an optical element (28), which is a diffractive optical element or a spatial modulator for light modifying spatial intensity patterns of a laser pulse,

    **characterized**

    - **in that** the processing field (42, 44, 48, 50) that is exposed to the laser pulse on the surface of the roller (22) is enlarged in dependence on the maximum average power $P_m$ of the laser source and/or is adapted such that the material-dependent and pulse-length-dependent optimum ablation fluence $\Phi_0$ is obtained, and the size of the exposed processing field (42, 44, 48, 50) is set in dependence on an ablation portion a, which indicates the part of the structure that is to be ablated.

2.  Method according to Claim 1, **characterized in that** the spatial intensity pattern of a laser pulse is modified such that laser ablation takes place only in a partial region of the processing field (42, 44, 48, 50) that is exposed to the laser pulse on the surface of the roller (22).

3.  Method according to Claim 1 or 2, **characterized in that** the processing field (42, 44, 48, 50) that is exposed to the laser pulse on the surface of the roller (22) is enlarged such that the processing field (42, 44, 48, 50) has a greater extent in at least one direction than the smallest structure size of the structure to be applied onto the surface of the roller (22).

4.  Method according to one of Claims 1 to 3, **characterized in that** the spatial intensity pattern of the laser pulse is modified such that, and the processing field (42, 44, 48, 50) that is exposed to the laser pulse on the surface of the roller (22) is modified, in particular enlarged, such that the fluence in the partial region of the processing field (42, 44, 48, 50) in which laser ablation takes place substantially corresponds to a prescribed optimum ablation fluence ($\Phi_0$).

**Revendications**

1.  Procédé de structuration d'un rouleau (22) par ablation laser,

    - dans lequel un système optique (26) dirige des impulsions laser sur la surface d'un rouleau (22) à structurer de sorte que le rouleau (22) est structuré par ablation laser en champs d'usinage (42, 44, 48, 50) exposés par les impulsions laser, comprenant un élément optique (28) qui est un élément optique diffractif ou un modulateur spatial pour la lumière qui modifie des motifs d'intensité spatiaux d'une impulsion laser,

    **caractérisé en ce que**

    - le champ d'usinage (42, 44, 48, 50) exposé par l'impulsion laser à la surface du rouleau (22) est agrandi et/ou adapté en fonction de la puissance moyenne maximale $P_m$ de la source laser de telle sorte qu'il en résulte la fluence d'ablation $\Phi_0$ optimale, dépendante du matériau et de la longueur d'impulsion, et la taille du champ d'usinage exposé (42, 44, 48, 50) est réglée en fonction d'une part d'ablation $\alpha$ qui indique la partie de la structure à ablater.

2.  Procédé selon la revendication 1, **caractérisé en ce que** le motif d'intensité spatial d'une impulsion laser est modifié de telle sorte qu'une ablation laser n'est effectuée que dans une zone partielle du champ d'usinage (42, 44, 48, 50) exposé par l'impulsion laser à la surface du rouleau (22).

3.  Procédé selon la revendication 1 ou 2, **caractérisé en ce que** le champ d'usinage (42, 44, 48, 50) exposé par l'impulsion laser à la surface du rouleau (22) est agrandi de telle sorte que le champ d'usinage (42, 44, 48, 50) présente au moins dans une direction une étendue plus grande que la plus petite taille de structure de la structure à appliquer à la surface du rouleau (22).

4. Procédé selon l'une quelconque des revendications 1 à 3, **caractérisé en ce que** le motif d'intensité spatial de l'impulsion laser est modifié de telle sorte et le champ d'usinage (42, 44, 48, 50) exposé par l'impulsion laser à la surface du rouleau (22) est modifié, en particulier agrandi, de telle sorte que la fluence dans la zone partielle du champ d'usinage (42, 44, 48, 50) dans laquelle l'ablation laser est effectuée correspond substantiellement à une fluence d'ablation ($\Phi_0$) optimale prédéfinie.

FIG. 1

FIG. 2

FIG. 3

FIG. 4

FIG. 5

FIG. 6

(a)                                                      (b)

FIG. 7

(a)                                                      (b)

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2006037 B1
- CN 101642778 B
- DE 102012017703 A1
- EP 2689883 A1


**In der Beschreibung aufgeführte Nicht-Patentliteratur**

- *Stahl und Eisen,* 1998, vol. 118 (3), 75-80
- **B. LAUER ; B. NEUENSCHWANDER ; B. JAEGGI ; M. SCHMID.** From fs-ns: Influance of he pulse duration onto the material removal rate and machining quality for metals. *ICALEO 2013,* 2013
- **Z. KUANG et al.** Ultrafast laser parallel microprocessing using high uniformity binary Dammann grating generated beam array. *Appl Surf. Sci.,* 2013, vol. 273, 101
- **A. JESACHER et al.** Parallel direct laser writing in three dimensions with spatially dependent aberration correction. *Optics Express,* 2010, vol. 18, 21090